# EUROPÄISCHE PATENTSCHRIFT

(11) **EP 1 222 087 B1**
(45) Veröffentlichungstag und Bekanntmachung des Hinweises auf die Patenterteilung: **29.03.2006**
(21) Anmeldenummer: 00972726.4
(22) Anmeldetag: 11.10.2000
(51) Int. Cl.: B60L 3/00, H01M 8/04, B60L 11/18

(54) **VERFAHREN UND ANORDNUNG ZUM STEUERN EINER SCHALTVERBINDUNG ZWISCHEN DEN ELEKTRISCHEN AUSGÄNGEN EINER BRENNSTOFFZELLE UND EINEM ISOLIERTEN ELEKTRISCHEN NETZ**
METHOD AND ARRANGEMENT FOR CONTROLLING A CIRCUIT CONNECTION BETWEEN THE ELECTRIC OUTPUTS OF A FUEL CELL AND AN ISOLATED ELECTRIC NETWORK
PROCEDE ET DISPOSITIF POUR COMMANDER UNE CONNEXION DE COMMUTATION ENTRE LES SORTIES ELECTRIQUES D'UNE PILE A COMBUSTIBLE ET UN RESEAU ELECTRIQUE ISOLE

(30) Priorität: 18.10.1999 DE 19950008
(43) Veröffentlichungstag der Anmeldung: 17.07.2002
(73) Patentinhaber: NuCellSys GmbH, 73230 Kirchheim/Teck-Nabern (DE)
(72) Erfinder: JANSEN, Axel, 73230 Kirchheim (DE); SONNTAG, Josef, 73230 Kirchheim (DE); URBAN, Hubert, 73275 Ohmden (DE)
(74) Vertreter: Finkele, Rolf
(86) Internationale Anmeldenummer: PCT/EP2000/009980
(87) Internationale Veröffentlichungsnummer: WO 2001/028804

(56) Entgegenhaltungen:
- WO-A-99/46140
- DE-A- 2 921 250
- DE-A- 4 322 767
- DE-C- 4 341 437
- DE-C- 19 503 749
- LEHMANN E: "ISOLATIONSUEBERWACHUNG DER BATTERIESTROMKREISE AUF SCHIENENFAHRZEUGEN" ELEKTRISCHE BAHNEN,DE,OLDENBOURG VERLAG. MUNCHEN, Bd. 96, Nr. 3, 1. März 1998 (1998-03-01), Seiten 73-77, XP000740104 ISSN: 0013-5437

## Beschreibung

Die Erfindung bezieht sich auf ein Verfahren und eine Anordnung zum Steuern und zur Einstellung des Schaltzustands einer Schaltverbindung zwischen den elektrischen Ausgängen bzw. Polen einer Brennstoffzelle und einem in der Vorrichtung angeordneten, elektrisch isolierten Netz, an das von der Brennstoffzelle mit Energie versorgte Verbraucher angeschlossen sind, wobei in der Vorrichtung ein weiteres Netz vorgesehen ist, das eine geringere Spannung als das an die Brennstoffzelle anschließbare Netz und elektrische Verbraucher sowie eine Speicherbatterie aufweist.

Insbesondere in mobilen Energieerzeugungssystemen mit Brennstoffzellen sind vielfach zwei elektrische Netze vorhandene; vgl. Dokument DE 19 503 749. Das von der Brennstoffzelle gespeiste Netz ist ein ungeerdetes, elektrisch isoliertes Netz und enthält z. B. einen oder mehrere Antriebsmotore für die mobile Vorrichtung. Für das Starten und den Betrieb der Brennstoffzelle sind eine Reihe von Hilfsaggregaten notwendig, deren Antriebsmotoren beim Starten der Brennstoffzelle die Energie aus einen Akkumulator erhalten, der in einem Niedervoltnetz angeordnet ist und die Antriebsmotore der Hilfsaggregate, die in einem Hochvoltnetz angeordnet sind, über einen DC/DC-Wandler mit Strom versorgt. Der Akkumulator kann im Betrieb der Brennstoffzelle über den zwischen beiden Netzen angeordneten Stromrichter geladen werden. Der Strom-richter, der eine galvanische Trennung zwischen beiden Netzen hat, speist im Betrieb der Brennstoffzelle auch die an das Niedervoltnetz angeschlossenen Verbraucher. Das Niedervoltnetz ist zumindest in Fahrzeugen im allgemeinen mit einem Pol an Fahrzeugmasse gelegt.

Zur Vermeidung einer Gefährdung von Personen oder Teilen der mobilen Einrichtung durch Strom aus der Brennstoffzelle darf in bestimmten Situationen oder bei bestimmten Ereignissen die Schaltverbindung am Ausgang der Brennstoffzelle entweder nicht geschlossen oder muß geöffnet werden. Beispielsweise muß bei Brennstoffzellen, die mit, Wasserstoff betrieben werden, das Brennstoffzellensystem vor und während des Betriebs auf unkontrolliertes Austreten des Wasserstoffs überprüft werden. Um einen Defekt der Brennstoffzelle zu verhindern, muß gewährleistet werden, daß das Hochvolt-Netz erst nach Erreichen der Betriebsbereitschaft an die Brennstoffzelle angeschaltet und bei unzulässig hoher Stromentnahme, z. B. im Kurzschlußfall, oder bei unzureichender Ausgangsspannung schnell von dieser getrennt wird. Aus Sicherheitsgründen muß auch immer ein Mindestisolationswiderstand zwischen den beiden Netzen vorhanden sein.

Der Erfindung liegt daher das Problem zugrunde, für eine Vorrichtung, die zur Energieerzeugung eine Brennstoffzelle mit einer Schaltverbindung zu einem elektrische Verbraucher enthaltenden, elektrisch isolierten Netz und ein weiteres, für eine geringere Spannung als die Brennstoffzellenspannung ausgelegtes Netz mit weiteren elektrischen Verbrauchern aufweist, ein Verfahren und eine Vorrichtung anzugeben, mit denen in Situationen oder bei bestimmten Betriebszuständen, bei denen durch eine leitende Verbindung zwischen den elektrischen Ausgängen der Brennstoffzelle und dem elektrisch isolierten Netz eine Gefährdung von Personen oder zumindest von Teilen der Vorrichtung oder der Brennstoffzelle selbst auftreten kann, die Schaltverbindung zwischen den Ausgängen der Brennstoffzellen und dem Netz entweder nicht geschlossen oder schnell geöffnet wird.

Das Problem wird bei einem Verfahren der eingangs beschriebenen Art erfindungsgemäß dadurch gelöst, daß von in oder an der Vorrichtung angeordneten Sensoren Vorrichtungszustände gemeldet werden, bei denen die Versorgung des elektrisch isolierten Netzes mit Energie aus Sicherheitsgründen ausgeschlossen oder ausgesetzt werden muß, daß mit einer aus dem weiteren Netz mit Energie versorgten Steuer- und Auswerteinheit die Sensoren überwacht werden, daß die Schaltverbindung an jedem Ausgang bzw. Pol der Brennstoffzelle zum Freischalten des elektrisch isolierten Netzes von den gegen die leitenden Teile der Vorrichtung elektrisch isolierten Ausgängen bzw. Polen der Brennstoffzelle wenigstens einen an den Ausgang bzw. Pol angeschlossenen Schalt bzw. Arbeitskontakt eines Schaltorgans aufweist, daß die an die Ausgänge bzw. Pole angeschlossenen Schalt- bzw. Arbeitskontakte zu einem oder zu getrennten Schaltorganen gehören, der bzw. die mit der Schalt- bzw. Steuereinheit verbunden sind, dass dem oder den Schaltorganen die Energie zum Schließen der Schalt- bzw. Arbeitskontakte beim Starten der Brennstoffzelle nach dem Erreichen der Betriebsbereitschaft der Brennstoffelle durch die Schalt- und Steuereinheit freigegeben wird, wenn von der Schalt- und Steuereinheit keine Meldung aus wenigstens einem Sensor, die sich auf eine aus Sicherheitsgründen unzulässige Schließung der Schalt- bzw. Arbeitskontakte bezieht, erfasst ist, und daß bei Erfassung wenigstens einer Meldung aus wenigstens einem Sensor, die sich auf eine aus Sicherheitsgründen unzulässige Schließstellung der Schalt bzw. Arbeitskontakte bezieht, von der Schalt- bzw. Steuereinheit die Energiezufuhr zu dem bzw. den Schaltorganen blockiert bzw. unterbrochen wird.

Mit dem erfindungsgemäßen Verfahren wird eine hohe Betriebssicherheit des Brennstoffzellensystems erreicht. Es kann damit eine Gefährdung von Personen und der Umwelt sowie Teilen der Vorrichtung selbst vermieden werden. Bei Kurzschlüssen im elektrisch isolierten Netz oder den von diesem Netz gespeisten Verbrauchern fällt die Energieversorgung des bzw. der Schaltorgane aus, so daß sich die Schalt- bzw. Arbeitskontakte von selbst öffnen. Das Brennstoffzellensystem geht bei der Meldung einer Gefahr oder Störung in einen Zustand über, bei dem die Energieabgabe aus der Brennstoffzelle unterbrochen ist, d. h. es wird ein sicherer Betriebszustand erreicht.

Vorzugsweise ist einem der an die Ausgänge bzw. Pole der Brennstoffzelle angeschlossenen Schalt- bzw. Arbeitskontakte die Reihenschaltung eines Widerstands und eines Schalt- bzw. Arbeitskontakts eines mit der Schalt- und Steuereinheit verbundenen, getrennt von den anderen Schaltorganen betätigbaren weiteren Schaltorgans parallel geschaltet, dem die Energie zum Schließen des Schalt- bzw. Arbeitskontakts nach dem Starten der Brennstoffzelle und dem Erreichen von deren Betriebsbereitschaft zugleich mit der Energie zum Schließen des Schalt- bzw. Arbeitskontakts des Schaltorgans zugeführt wird, dessen Schalt- bzw. Arbeitskontakt an den anderen Ausgang bzw. Pol angeschlossen ist, und wobei bei der Erfassung einer Meldung durch die Schalt- und Steuereinheit, die sich auf eine unzulässige Schließstellung der Schalt- bzw. Arbeitskontakte der Schaltorgane bezieht, die Energie zum Betätigen des weiteren Schaltorgans und der anderen Schaltorgane blockiert bzw. unterbrochen wird. Mit dem vorstehend beschriebenen Verfahren wird eine Vorladung zwischen den Brennstoffzellenausgängen und dem elektrisch isolierten Netz erreicht. Die Potentiale auf beiden Seiten der Schaltorgankontakte werden durch Schließen des den Widerstand enthaltenden Vorladungszweigs angeglichen, um die Funkenbildung beim Schließen der Arbeitskontakte weitgehend zu vermeiden.

Bei einer bevorzugten Ausführungsform werden das Austreten von Wasserstoff aus den wasserstofferzeugenden bzw. wasserstoffspeichernden Einheiten durch Gassensoren, der Laststrom der Brennstoffzelle auf Überschreiten oder Unterschreiten von Grenzwerten durch einen der Brennstoffzelle nachgeschalteten Stromsensor, der Aufprall der mobilen Vorrichtung auf ein Hindernis durch wenigstens einen Crash-Sensor, der Isolationswiderstand des elektrisch isolierten Netzes gegen die Masse der mobilen Vorrichtung, die Ausgangsspannung der Brennstoffzelle auf Über- oder Unterschreiten von Grenzwerten, der Schließzustand von Türen und Deckeln der mobilen Vorrichtung durch Schalter und die Versorgungsspannung im weiteren Netz auf Über- und Unterschreiten von Grenzwerten überwacht und auf Vorliegen von Bedingungen für das Öffnen der Schalt- bzw. Arbeitskontakte der Schaltorgane geprüft.

Insbesondere wird der Isolationswiderstand zwischen dem elektrisch isolierten Netz und der Masse der mobilen Vorrichtung durch ein Impulsmeßverfahren bestimmt, mit dem positive und negative Impulse über einen Meßwiderstand vorgegebener Größe auf die Masse gegeben werden, wobei die Impulse einen über die Isolationswiderstände zu einem Bezugspunkt im Netz fließenden Strom hervorrufen, der durch einen Spannungsabfall am Meßwiderstand gemessen wird. Die Meßspannung wird über einen Hoch- und einen Tiefpaß einem A/D-Umsetzer zugeführt. Der Isolationsiderstand wird auf Unterschreitung einer vorgebbaren unteren Schwelle und Überschreitung einer zu hohen Schwelle überwacht. Die Isolationsmessung wird ständig während des Betriebs der mobilen Einrichtung ausgeführt, jedoch beim Starten als Schnellmessung mit verminderter Genauigkeit. Bei zu geringem Isolationswiderstand wird das ungeerdete Netz von der Brennstoffzelle getrennt.

Bei einer anderen zweckmäßigen Ausführungsform wird die Strommeßeinrichtung durch Einspeisung eines Prüfstroms in eine zusätzliche Wicklung des einen Stromwandler enthaltenden Stromsensors überwacht.

Aus Sicherheitsgründen werden bei einer bevorzugten Ausführungsform beim Ansprechen eines oder mehrerer Gassensoren die Schalt- bzw. Arbeitkontakte der Schaltverbindung zwischen den Ausgängen bzw. Polen der Brennstoffzelle und dem elektrisch isolierten Netz sowie wenigstens ein Schalt- bzw. Arbeitskontakt eines zusätzlichen Schaltorgans im weiteren Netz zur Unterbrechung der Energieversorgung wenigstens der Schalt- und Steuereinheit geöffnet.

Bei einer Anordnung der eingangs beschriebenen Art wird das Problem erfindungsgemäß dadurch gelöst, daß die Ausgänge bzw. Pole der Brennstoffzelle je über wenigstens einen Schalt- bzw. Arbeitskontakt mit dem elektrisch isolierten Netz verbunden sind, daß eine Steuer- und Auswerteinheit einer Baugruppe einen an einen internen Bus der mobilen Vorrichtung angeschlossenen Prozessor, eine Logikschaltung mit hardwaremäßig ausgebildeten logischen Funktionen, einen mit dem Prozessor galvanisch getrennt verbundenen A/D-Umsetzer, der eingangsseitig mit analo-gen Sensoren für den Strom und die Spannung der Brennstoffzelle und mit einer Meßeinrichtung für den Iso-lationswiderstand zwischen dem elektrisch isolierten Netz und der Masse der mobilen Vorrichtung verbunden ist, einen mit dem Prozessor und der Logikschaltung galvanisch getrennten verbundenen Sensor für den Brennstoffzellenstrom, ein vom weiteren Netz gespeistes Netzteil mit galvanischer Trennung für die Versorgung des A/D-Umsetzers mit Betriebsspannung, an den Ausgang der Logikschaltung angeschlossene Steuerbausteine und an den Prozessor und die Logikschaltung angeschlossene Umsetzer für die Versorgung von Wasserstoffsensoren mit Betriebsspannung und die Anpassung der von diesen Sensoren ausgegebenen Signale an die Pegel des Prozessors und der Logikschaltung aufweist, daß die Logikschaltung, der Prozessor, die Umsetzer und die Steuerbausteine mit Betriebsspannung vom weiteren Netz beaufschlagt werden, daß mindestens ein Ausgang des Prozessors mit einem entsprechenden Eingang der Logikschaltung verbunden ist, die mit Sensoren für die Erzeugung von Meldesignalen von Betriebszuständen der mobilen Vorrichtung oder von deren Bauteilen verbunden ist, daß durch die oder über die von einem übergeordneten Steuergerät ge-steuerte Logikschaltung die Freigabe von Ausgangssignalen der Steuerbausteine steuerbar ist, an die jeweils eine Spule eines einen der beiden Arbeitkontakte aufweisenden ersten Schaltorgans und eines den anderen Schaltkontakt aufweisenden zweiten Schaltorgans angeschlossen ist, und daß bei vom Prozessor erfaßten Strom-, Spannungs- und/oder Isolationswiderstandsmeßwerten und bei von der Logikschaltung erfaßten Sensormeßwerten, bei denen die Versorgung des elektrisch isolierten Netzes aus Sicherheitsgründen ausgeschlossen oder ausgesetzt werden muß, die Ausgabe von Ausgangssignalen der Steuerbausteine an die Spulen blockiert bzw. unterbrochen wird.

Mit der erfindungsgemäßen Baugruppe wird ein kompaktes Steuergerät mit relativ geringerem Gewicht und geringen Abmessungen für eine mobiles Brennstoffzellensystem verfügbar gemacht, mit dem beim Betrieb des Brennstoffzellensystems zahlreiche Sicherheitsanforderungen erfüllt werden können. Die von der Logik-schaltung verarbeiteten Meldungen über kritische Zustände des Brennstoffzellensystems oder der mobilen Einrichtung führen sofort zur Öffnung der Schaltkontakte.

Vorzugsweise ist ein weiterer Schalt- bzw. Arbeitskontakt eines dritten Schaltorgans in Reihe mit einem Widerstand parallel um Schalt- bzw. Arbeitskontakt des zweiten oder ersten Schaltorgans angeordnet, wobei das dritte Schaltorgan mit einem vom Netz mit Betriebsspannung versorgten Treiberbaustein auf der Baugruppe verbunden ist, der an die Logikschaltung angeschlossen ist, die den Treiberbaustein in der Startphase nach dem Erreichen der Betriebsbereitschaft der Brennstoffzelle zeitlich vor der Abgabe eines Steuersignals an den Steuerbautein, der das zweite oder erste Schaltorgan betätigt, mit einem Steuersignal zur Ausgabe eines Betätigungssignals an das dritte Schaltorgan zugleich mit der Ausgabe eines Steuersignals zur Betätigung des ersten oder zweiten Schaltorgans veranlaßt und zur Abschaltung der Ausgänge der Brennstoffzelle vom elektrisch isolierten Netz die Ausgabe von Steuersignalen zur Betätigung der drei Schaltorgane blockiert. Mit der vorstehend beschriebenen Anordung wird eine Vorladung zwischen Brennstoffzellenausgängen und elektrisch isoliertem Netz erreicht. Durch die Vorladung werden die Potentiale beiderseits der Arbeitskontaktpole aneinander angeglichen, so daß eine Funkenbildung beim Schalten weitgehend vermieden wird. Hierdurch werden die Kontakte geschont.

Es ist auch günstig beim Ansprechen der Gassensoren nicht nur die Schaltverbindung zwischen der Brennstoffzelle und dem elektrisch isolierten Netz sondern auch die Verbindung zum weiteren Netz mit dem Akkumulator abzuschalten, indem mit dem Ausgang der Logikschaltung ein weiterer, vom weiteren Netz mit Betriebsspannung beaufschlagter Treiberbaustein auf der Baugruppe verbunden ist, von dem ein Systemsrelais steuerbar ist, das zur Unterbrechung der Stromversorgung aus dem weiteren Netz zumindest für die Baugruppe beim Ansprechen wenigstens eines Gassensors zusammen mit den Schaltorganen abschaltbar ist.

Bei einer bevorzugten Ausführungsform weist die Baugruppe eine Leiterplatte mit einem ersten Abschnitt auf, der die von dem weiteren Netz mit Betriebsspannung versorgten Bauelemente, wie Logikschaltung, Prozessor, Umsetzer, Steuer- und Treiberbausteine mit zugehörigen Leiterbahnen und die Anschlüsse zu den Spulen der Schaltorgane und Anschlüsse für mit der Spannung des weiteren Netzes versorgte Sensoren, für Busleitungen und für die Masseverbindung trägt und der von einem zweiten Abschnitt getrennt ist, der von der Spannung der Brennstoffzelle oder des isolierten elektrischen Netzes beaufschlagte Bauelemente wie den Stromsensor, einen Spannungsteiler für die Spannungsmessung und die zugehörigen Leiterbahnen sowie Anschlüsse für das von der Brennstoffzelle gespeiste Netz trägt. Aufgrund der durch die beiden Abschnitte gebildeten Trennung der Bauteile und Leiterbahnen, die niedrige Spannungen führen, von den Bauteilen und Leiterbahnen, die hohe Spannungen führen, ist ein hohes Maß an Sicherheit gegen Kurzschlüsse auf der Leiterplatte zwischen beiden Netzen gegeben.

Bei einer zweckmäßigen Ausführungsform ist die Minusseite der Brennstoffzellenspannung Bezugspotential für von der Spannung der Brennstoffzelle beaufschlagte Bauteile auf der Baugruppe und an einen Anschluß des zweiten Abschnitts der Baugruppe gelegt. Dieses Bezugspotential erlaubt eine große Schaltungsvereinfachung. Vorzugsweise weist der Stromsensor einen Stromwandler mit einem berührungslos durch die Leiterplatte und durch einen auf dieser angeordneten Stromwandler-Kern hindurchgeführten Leiter auf, wobei der Strom nach dem Kompensationsprinzip gemessen wird.

Der Stromwandler trägt insbesondere eine Zusatzwicklung, die an eine Einrichtung zur Einspeisung eines definierten Stroms angeschlossen ist, mit der die Strommessung auf Funktionsfähigkeit überwacht wird. Im Prozessor sind ein oberer und ein unterer Grenzwert für den Brennstoffzellenstrom gespeichert. Sowohl beim Überschreiten des oberen Grenzwerts als auch beim Unterschreiten der unteren Grenze wird eine entsprechende Mel-dung an den Bus ausgegeben, und die Schalt- bzw. Arbeitkon-takte hinter den Polen bzw. Ausgängen der Brennstoffzelle werden geöffnet.

Für die Messung des Isolationswiderstands des isolierten elektrischen Netzes gegenüber der Masse der mobilen Vorrichtung ist vorzugsweise ein auf der Leiterplatte im zweiten Abschnitt der Leiterplatte angeordneter Meßwiderstand vorgesehen, der mit positiven und negativen Spannungsimpulsen beaufschlagt wird, wobei die Impulse über einen Stromfluß am Meßwiderstand eine Spannung hervorrufen, die über einen Hochpaß und einen Tiefpaß dem A/D-Umsetzer zugeführt wird, dessen Ausgangssignale dem Prozessor zugeführt werden. Der Hochpaß blockt die Brennstoffzellengleichspannung ab und der Tiefpaß blendet hochfrequente Störungen aus. Der Prozessor verarbeitet die Meßwerte für die Bestimmung des Isolationswiderstands nach einer gewissen Wartezeit, um keine Meßwerte während Einschwingvorgängen zu übernehmen.

Der Prozessor wird zusammen mit seiner Software vorzugsweise von einem Watchdog-Baustein überwacht, d. h. ein Defekt des Prozessorbausteins bzw. ein Absturz der Software bewirkt eine Öffnung der Arbeitskontakte am Ausgang der Brennstoffzelle, d. h. auch der Vorladestromzweig wird stromlos.

Zweckmäßigerweise wird auch der Bus ständig auf einwandfreie Funktion überprüft. Es ist vorteilhaft, wenn die Versorgungsspannung des weiteren Netzes z. B. durch eine entsprechende Eingabe in den Prozessor mittels eines A/D-Umsetzers erfaßt und auf vorgegebene Grenzwerte hin überwacht wird, bei deren Über- bzw. Unterschreitung vom Prozessor das Signal zum Öffnen der Arbeits- bzw. Schaltkontakte an die Logikschaltung gegeben wird.

Bei einer besonders zweckmäßigen Ausführungsform sind die Ein- und Ausgänge der auf der Leiterplatte angeordneten Bauteile wie Logikschaltung, Prozessor, Steuer- und Treiberstufen und Umsetzer kurzschlußfest ausgelegt. Mit dieser Maßnahme wird ein großes Maß an Sicherheit in der Arbeitsweise der Baugruppe erreicht.

Insbesondere werden Masse- und Kurzschlüsse als Fehler erfaßt.

Die Erfindung wird im folgenden an Hand eines in einer Zeichnung dargestellten Ausführungsbeispiels näher beschrieben, aus dem sich weitere Einzelheiten, Merkmale und Vorteile ergeben.

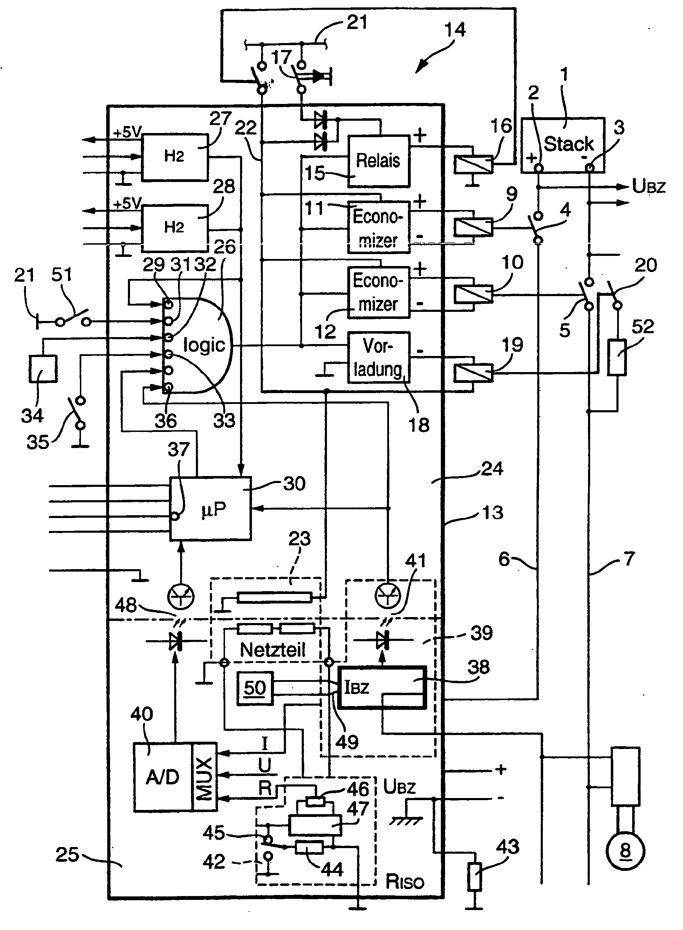

In der Zeichnung ist im Blockschaltbild eine Baugruppe einer Anordnung zum Steuern der Schaltzustände einer Schalterverbindung zwischen den elektrischen Ausgängen einer in einem Fahrzeug angeordneten Brennstoffzelle und einem im Fahrzeug angeordneten elektrisch isolierten Netz dargestellt. Die Erfindung ist jedoch selbstverständlich auch auf Brennstoffzellen außerhalb von Fahrzeugen anzuwenden.

Eine in einem nicht näher dargestellten Fahrzeug angeordnete Brennstoffzelle 1, die Bestandteil eines ebenfalls nicht näher dargestellten Brennstoffzellensystems ist, ist mit ihren elektrischen Polen bzw. Ausgängen 2 und 3 jeweils an einen Schalt- bzw. Arbeitskontakt 4 und einen Schalt- bzw. Arbeitskontakt 5 wenigstens eins Schaltorgans angeschlossen. Bei der Brennstoffzelle 1 handelt es sich insbesondere um eine aus zahlreichen einzelnen Modulen bestehende PEM-Zelle. Das Brennstoffzellensystem enthält einen Speicher für Wasserstoff oder eine Einrichtung zur Erzeugung von Wasserstoff aus einem Kohlenwasserstoff und Hilfsaggregate zur Förderung bzw. Komprimierung von Wasserstoff und Luft.

Der Anschluß 2 hat positive Polarität und der Anschluß 3 negative Polarität. Die Ausgänge 2,3 sind gegeneinander und gegen die leitenden Teile des Fahrzeugs elektrisch isoliert. An den Arbeitskontakt 4 ist eine Leitung 6 und an den Arbeitskontakt 5 eine Leitung 7 angeschlossen. Die Lei-tungen 6, 7 sind Bestandteile eines elektrisch isolierten bzw. ungeerdeten Netzes, das eine Reihe von Verbrauchern enthält, die von der Brennstoffzelle 1 gespeist werden. Ein wesentlicher Verbraucher ist ein über einen Wechselrichter mit den Netz verbundener Fahrmotor 8. Weiterer Verbraucher, z. B. ein DC/DC-Wandler für die Erzeugung eines Ladestroms für einen Akkumulator in einem weiteren im Fahrzeug angeordneten Netz sind in der Zeichnung nicht dargestellt.

Der Arbeitskontakt 4 ist Bestandteil eines im Fahrzeug angeordneten ersten Schaltorgans 9, das ein Lasttrennschalter oder Leistungsschalter oder Schütz 9 bzw. Relais sein kann. Der Arbeitskontakt 5 ist ein Bestandteil eines im Fahrzeug angeordneten zweiten Schaltorgans 10, das ebenfalls ein Leistungs- oder Lasttrennschalter oder Schütz bzw. Relais sein kann. Die Arbeitskontakte 4, 5 sind aus Sicherheitsgründen nicht Bestandteile eines einzigen Schalters. Da die Arbeitskontakte 4, 5 in kritischen Zuständen des Brennstoffzellensystems oder des Fahrzeugs öffnen müssen, ist durch die Anordnung zweier, voneinander unabhängig betätigbarer Kontakte ein höheres Maß an Sicherheit dafür gegeben, daß ein Kontakt bei einer Störung des anderen arbeitet und das Netz wenigstens einpolig abschaltet.

Die Spulen der Schalter bzw. Schütze 9, 10 oder Relais sind jeweils mit Ausgängen eines Steuerbausteins in Form eines Economizers 11 und eines Economizers 12 verbunden. Bei den beiden Economizern 11 und 12, die auf einer Leiterplatte 13 einer Baugruppe 14 angeordnet sind und zu einer im folgenden näher erläuterten Steuer- und Auswerteinheit gehören, handelt es sich um Schaltungen, die für Gleichstromschütze bzw. Relais einen höheren Strom zum Betätigen, d. h. Anziehen, erzeugen und danach den geringeren Haltestrom für die Schütze 9, 10 bzw. Relais ausgeben. Auf der Leiterplatte 13 der Baugruppe 14 befindet sich weiterhin ein Relais-Treiberbaustein 15, mit dem ein Relais 16 außerhalb der Baugruppe verbunden ist. Der Treiberbaustein 15 hat zwei Eingänge, von denen einer über eine Diode mit einem Kontakt 17 eines Schlüsselschalters verbunden ist, mit dem das Fahrzeug gestartet wird. Bei geschlossenem Schlüsselschalter liegt am einen Eingang des Treiberbausteins 15 eine Spannung eines weiteren Netzes im Fahrzeug an. Das weitere Netz, das in der Zeichnung mit 21 bezeichnet ist, ist als übliches Bordnetz für Fahrzeuge ausgebildet und enthält einen Akkumulator von z. B. 12 V. Verbraucher in diesem weiteren Netz, das eine geringere Spannung als das an die Brenn-stoffzelle 1 anschließbare Netz hat, sind z. B. Scheibenwischermotore, Lüfter, Scheibenantriebsmotore, Lampen, Blinker usw. Das weitere Netz wird im folgenden auch Niedervoltnetz und das von der Brennstoffzelle gespeiste Netz als Hochvoltnetz bezeichnet. Das Relais 16, das auch als Systemrelais bezeichnet wird, versorgt nach dem Ansprechen elektronische Bauelemente der Baugruppe 14 mit Betriebsspannung.

Auf der Leiterplatte 13 der Baugruppe 14 befindet sich noch ein weiterer Treiberbaustein 18 mit zwei Eingängen, an dessen Ausgang ein drittes Schaltorgan 19, z. B. ein Relais 19, das ebenfalls auf der Baugruppe 14 angeordnet sein kann, angeschlossen ist. Ein Arbeitskontakt 20 des Relais 19 ist in Reihe mit einem Widerstand 52 gelegt. Die Reihenschaltung aus Arbeitskontakt 20 und ohmschem Widerstand 52 liegt parallel zum Arbeitkontakt 5 kann aber auch wahlweise parallel zum Arbeitkontakt 4 angeordnet sein. Der Zweig aus Arbeitskontakt 20 und Widerstand 52 ist als Vorladeschaltung für die Angleichung der Spannung auf der Brennstoffzellenseite in deren Leerlauf und auf der Seite des elektrisch isolierten Netzes bei der Verbindung des DC/DC-Wandlers mit dem Akkumulator bestimmt. Die Anschlüsse für die Betriebsstromversorgung der Economizer 11, 12 sind an die mit dem Netz 21 verbundene Leiterbahn 22 angeschlossen. Der Anschluß für die Betriebsstromversorgung der Treiberstufe 15 ist über eine nicht näher bezeichnete Diode mit der Leiterbahn 22 verbunden. Weiterhin steht ein Anschluß eines Netzgeräts 23 mit der Leiterbahn 22 in Verbindung. Der zweite Anschluß des Netzgeräts 23 ist an die Fahrzeugmasse gelegt. Das Netzgerät 23 ist als DC/DC-Wandler ausgebildet und hat eine in der Zeichnung durch das Transformatorsymbol gekennzeichnete, galvanische Trennung zwischen Eingang- und Ausgangsspannung. Aus der Betriebsspannung von z. B. 12 V des Bordnetzes 21 erzeugt das Netzteil eine höhere Spannung von z. B. 15 V.

Die Leiterplatte 14 ist in Bezug auf die Betriebsspannung und die Spannungspegel der auf ihr angeordneten Bauelemente in zwei Abschnitte 24, 25 unterteilt, durch die eine räumliche. Trennung der Bauelemente mit unterschiedlichem Spannungsniveau erreicht wird. In der Zeichnung ist dies durch eine strichpunktierte Linie dargestellt. Auf diese Weise wird ein hohes Maß an Sicherheit gegen Kurzschlüsse zwischen Bauelementen und Leitungen bzw. Leiterbahnen mit unterschiedlichem Spannungs-niveau erreicht.

Auf dem Abschnitt 24, dem das niedrige Spannungsniveau zugeordnet ist, befindet sich eine Logikschaltung 26, die eine Reihe von Eingängen hat, deren Verbindung mit Bauelementen in folgenden noch näher beschrieben werden. Ausgangsseitig ist die Logikschaltung mit Steuereingängen der Economizer 11, 12 und der Treiberbausteine 15 und 18 verbunden.

Im Brennstoffzellensystem sind Gassensoren für Wasserstoff zur Überwachung der Betriebsmittel vorhanden. Diese Gassensoren benötigen Betriebsspannungen, die von der Spannung des Bordnetzes 21 verschieden sind. Im allgemeinen ist die Betriebsspannung kleiner als die Bordnetzspannung. Die von den Gassensoren erzeugten Signale befinden sich zumindest nicht im Spannungsniveau des Bordnetzes oder im Bereich der von der Logikschaltung 26 verarbeitbaren Eingangssignale. Auf der Leiterplatte 13 sind daher analoge Umsetzer- und Anpassungsschaltungen 27, 28 vorgesehen. Die Umsetzer- und Anpassungsschaltungen 27, 28 haben jeweils nicht näher bezeichnete Ausgänge, an die die Betriebsspannungsanschlüsse von nicht näher dargestellten Gassensoren angeschlossen sind. Weiterhin haben die Umsetzer- und Ausgangsschaltungen 27, 28 jeweils zwei nicht näher bezeichnete Eingänge für die von den Gassensoren ausgegebenen analogen Signale. Die Ausgänge der Umsetzer- und Anpassungsschaltungen 27, 28 sind mit einem Eingang 29 der Logikschaltung 26 und einen Eingang eines Prozessors 30 verbunden, der vorzugsweise ein µP ist. Es kann sich bei diesem Eingang des Prozessors um einen analogen Eingang mit nachgeschaltetem A/D-Umsetzer handeln. Dagegen ist der Eingang 29 der Logikschaltung 26 für ein Schwellwertfassung ausgebildet, d. h. die Ausgangssignale der Umsetzer- und Anpassungsschaltungen 27, 28 werden von der Logikschaltung 26 erst ab einer gewissen Höhe weiterverarbeitet. Die Umsetzer- und Anpassungsschaltungen 27, 28, die Logikschaltung 26 und der Prozessor 30 sind mit ihren entsprechenden Anschlüssen auf der Leiterplatte 14 zu externen Bauteilen und den Leiterbahnen zwischen den Anschlüssen und den Eingängen dieser Bauteile im Abschnitt 24 angeordnet. Die Logikschaltung 26 hat weitere Eingänge, die symbolisch mit der Ziffer 31 bezeichnet sind. An diese Eingänge 31 sind Schaltkontakte, z. B. ein Schaltkontakt 51, angeschlossen. Mit diesen Schaltkontakten wird der Schließzustand von Vorrichtungen im bzw. am Fahrzeug überwacht. Beispielsweise ist der Schaltkontakt 51, der vom Bordnetz 21 mit Spannung versorgt wird, für die Überwachung eines Deckels für den Kofferraum des Fahrzeugs vorgesehen. Weitere Eingänge der Logikschaltung 26, die in der Zeichnung zusammen mit der Ziffer 32 bezeichnet sind, sind insbesondere an Sensoren, die Zusammenstöße des Fahrzeugs erfassen und melden, angeschlossen. Ein solcher Sensor ist in der Zeichnung dargestellt und mit 34 bezeichnet. Ein weiterer Eingang 33 der Logikschaltung 26 ist mit einem Not-Ausschalter 35 verbunden. Mindestens ein Eingang 36 der Logikschaltung 26 ist mit einem entsprechenden Ausgang des Prozessors 30 verbunden.

Der Prozessor 30 hat nicht näher bezeichnete Eingänge, die mit einen Bus verbunden sind, an den auch andere Teilnehmer des Fahrzeugs angeschlossen sind. Es handelt sich bei dem Bus vorzugsweise um den an sich bekannten CAN-Bus. Eine serielle Schnittstelle 37 des Prozessors 30 ist an entsprechende Übertragungsgeräte anschließbar. Weiterhin ist am Prozessor 30 ein nicht näher bezeichneter BOOT-Eingang vorhanden. Bezugspotential für die auf dem Abschnitt 24 angeordneten Bauelemente ist Massenpotential des Fahrzeugs.

Auf dem Abschnitt 25 ist ein Stromwandler 38 vorhanden, der als Durchsteckwandler ausgebildet ist, durch den und durch eine mit der Kernöffnung korrespondierende Öffnung der Leiterplatte 13 der Stromleiter 6 berührungslos hindurchgeführt ist. Der Stromwandler 38 ist Teil eines Stromsensors 39, der nach dem an sich bekannten Kompensationsprinzip den Brennstoffzellenstrom mißt. Der Stromsensor 39 ist z. B. über einen nicht dargestellten Multiplexer mit einem A/D-Umsetzer ver-bunden. Weiterhin hat der Stromsensor 39 am Ausgang einen Optokoppler 41, dessen Ausgang einerseits mit einem Eingang des Prozessors 30 und andererseits mit einem Eingang der Logikschaltung 26 verbunden ist. Der A/D-Umsetzer 40 ist mit einem Eingang z. B. über den Multiplexer und eine nicht dargestellte Leitung mit dem Ausgang 3 verbunden.

Im Abschnitt 25 befindet sich eine Einrichtung 42 zur Messung der Isolationswiderstands zwischen dem elektrisch isolierten Netz und der Masse des Fahrzeugs. Der Isolationswiderstand ist in der Zeichnung gestrichelt dargestellt und mit 43 bezeichnet. Bezugspotential für die im Abschnitt 25 angeordneten Bauelemente ist das Potential des negativen Ausgangs 3 der Brennstoffzelle. Der Isolationswiderstand 43 wird mit einem Impulsverfahren gemessen. Die Einrichtung 42 enthält einen Meßwiderstand 44, dessen Wert vorgegeben ist. Über einen Schalter 45 werden abwechselnd positive und negative Impulse dem Meßwiderstand 44 zugeführt. Die positive und negative Spannung wird vom Netzteil 23 erzeugt, das mit dem Bezugsspannungsanschluß der Brennstoffzelle verbunden ist. Es findet aufgrund der Spannungsimpulse ein Stromfluß vom Meßwiderstand 44 zum Fahrzeugchassis über den Isolationswiderstand 43 zurück zum Bezugspunkt der Brennstoffzellenspannung statt, wodurch ein Spannungsabfall am Meßwiderstand 44 entsteht. Die am Meßwiderstand 44 auftretende Spannung wird über einem Hochpaß, der die Brennstoffzellen-Gleichspannung abblockt und einen Tiefpaß, der hochfrequente Störungen ausblendet, über einen Spannungsteiler 46 dem A/D-Umsetzer 40 zugeführt. Hoch- und Tiefpaß sind in der Zeichnung mit der Bezugsziffer 47 bezeichnet. Der Ausgang des A/D-Umsetzers 40 ist über einen Optokoppler 48 mit einem Eingang des Prozessor 30 verbunden. Die Einrichtungen zur Messung und Erfassung elektrischer oder mechanischer Größen und Zustände der mobilen Vorrichtung werden auch als Sensoren bezeichnet.

Bei der Isolationsmessung übernimmt der Prozessor 30 eine Reihe von Meßwerten der Spannung am Meßwiderstand 44 erst nach einer bestimmten Wartezeit, die auf die Einschwingzeit des Meßsystems abgestimmt ist, mittelt diese, um niederfrequente Störungen zu minimieren, und berechnet anschließend den Isolationswiderstand. Im Betrieb des Fahrzeugs wird ständig der Isolationswiderstand des ungeerdeten Netzes der Brennstoffzelle 1 gemessen. Bei unzulässigen Isolationsverschlechterungen veranlaßt der Prozessor 30 über die Logikschaltung 26 das Öffnen der Arbeits- bzw. Schaltkontakte 4, 5, 20 der Schaltorgane.

Auf dem Stromwandler 38 befindet sich eine Zusatzwicklung 49, in die von einer Stromquelle 50 ein definierter Strom eingespeist wird, um die Funktionsfähigkeit des Stromwandlers und des Optokoplers 41 einschließlich der Leiterbahnen bis zum Prozessor 30 zu überprüfen.

Der Prozessor 30 führt einen automatisch Offsetabgleich für die analog gemessenen Werte wie Brennstoffzellenspannung, Brennstoffzellenstrom und Isolationswiderstand durch und überwacht diese Werte durch Vergleich mit vorgebbaren Werten. Weiterhin gibt der Prozessor 30 diese Werte auf den Bus aus, so daß sie für andere Busteilnehmer im Fahrzeug verfügbar sind. Bei Über- bzw. Unterschreitung kritischer Werte gibt der Prozessor 30 eine entsprechende Meldung an die Logikschaltung 26 ab.

Die Logikschaltung 26 hat hardwaremäßig realisierte logische Funktionen kombinatorischer und sequentieller Art und gegebenenfalls Speicherfunktionen, wodurch eine schnelle Verarbeitung der Eingangssignale sichergestellt wird. Dies bedeutet, daß bei kritischen Situation im und am Fahrzeug bzw. Gefahren für die Fahrzeuginsassen, die von den Gassensoren, dem Schaltkontakt 51, den Sensoren 34 und dem Not-Aus-Schalter 35 gemeldet werden, von der Logikschaltung 26 die entsprechenden Meldungen sehr schnell verarbeitet bzw. weitergeleitet werden und über die Economizer 11, 12 bzw. die Vorladung 18 das Öffnen der Schaltkontakte 4, 5, 20 hervorrufen. Das Hochvoltnetz mit den daran angeschlossenen Verbrauchern wird daher spannungslos, so daß von daher keine Gefahr mehr in Bezug auf eine gefährliche Spannung ausgehen kann. Weiterhin wird über das Relais 16 ein Schalter im 12V-Netz betätigt.

Nach der Betätigung des Schlüsselschalters 17 wird zuerst der auf der Niedervoltseite der Baugruppe 14 angeordnete Teil der Bauteile wie µP 30, Logikschaltung 26 und die Umsetzer- und Anpaßschaltungen mit Betriebsspannung versorgt und nimmt den Betrieb auf. Nach der Startphase der Brennstoffzelle 1 steht an den Ausgängen der Brennstoffzelle 1 bei geöffneten Kontakten 4, 5, 20 die Leerlaufspannung von z. B. 450 V an. Danach nehmen Bauelemente auf der Hochvoltseite der Baugruppe 14 ihren Betrieb auf, wodurch z. B. die Leerlaufspannung und der Isolationswiderstand gemessen werden. Der A/D-Wandler 40 hat einen nicht dargestellten Multiplexer integriert, mit dem die verschiedenen Signalen bzw. Meßwerte von Strom, Spannung und Widerstand seriell dem µP 30 zugeleitet werden.

Wenn nach dem Starten der Brennstoffzelle keine Alarme wie Ansprechen der Gassensoren, kritischer Wert der Leerlaufspannung, kritischer Wert des Isolationswiderstands oder ein anderer, von einem Sensor erzeugter kritischer Wert vom µP 30 bzw. von der Logikschaltung 26 festgestellt wird, werden die Arbeitskontakte 4 und 20 geschlossen, wodurch die Ausgangsspannung der Brennstoffzelle und die im elektrisch isolierten Netz aufgrund des vom Akkumulator gespeisten DC/DC-Wandlers vorhandene Spannung von z. B. 200 V einander angeglichen werden. Der Befehl zum Einschalten der Arbeitskontakte kann von einem nicht dargestellten übergeordneten Steuergerät auf dem CAN-Bus der Logikschaltung 26 zugeführt werden, die dann die Betätigung der Arbeitskontakte 4 und 20 veranlaßt. Nach dem Einschalten der Arbeitkontakte 20 wird auch der Arbeitskontakt 5 geschlossen. Aufgrund des Potentialausgleichs an den Kontaktpolen des Arbeitskontakts 5 werden Funken weitgehend vermieden, so daß auch bei häufigen Schalten die Kontakte geschont werden.

Die Feststellung eines Kurzschlußstroms im Brennstoffzellennetz wird dem Prozessor 30 gemeldet und bewirkt über den Eingang 36 der Logikschaltung die sofortige Auslösung, d. h. Öffnung, Arbeits- bzw. der Schaltkontakte 4, 5 und 20.

Durch die vorstehend beschriebenen Überwachungsmaßnahmen und die Trennung der Baugruppe 14 in einen Niedervolt-Abschnitt 24 und einen Hochvolt-Abschnitt 25 wird bereits ein hohes Maß an Sicherheit erreicht. Die Einrichtung 42 zur Messung des Isolationswiderstands wird vom Prozessor 30 aus über eine nicht näher dargestellte Optokoppler-Schnittstelle angestoßen bzw. gesteu-ert. Dies trifft auch auf den A/D-Umsetzer 40 und den Stromsensor 38 zu.

Um ein möglichst großes Maß an Sicherheit zu erreichen sind noch folgende Maßnahmen vorgesehen:

Der Prozessor 30 wird zusammen mit der Software von einem Watchdogbaustein überwacht. Das heißt, ein Defekt des Prozessorsbausteins bzw. ein Absturz der Software führt zum Abschalten der beiden Trennschalter bzw. Schaltkontakte 4, 5 und 20.

Die korrekte Arbeitsweise des CAN-Bus Anschlusses wird ständig geprüft und Fehler werden erkannt und gemeldet bzw. bewirken eine Öffnung der Arbeits- bzw. Schaltkontakte 4, 5 und 20.

Versorgungsspannungen der Elektronik werden eingelesen und auf ihre festgelegten Grenzen hin überwacht, um zu verhindern, daß die Schaltkontakte 4, 5, 20 beim Starten des Fahrzeugs geschlossen werden oder während des Betriebs des Fahrzeugs eine Störung durch zu niedrige Bordnetzspannung hervorgerufen wird. Je nach der Höhe der Abweichung vom festgelegten Grenzwert können verschiedene Maßnahmen wie Meldung und/oder Stillegung von Aggregaten des Fahrzeugs oder Abschaltung der Schaltkontakte 4, 5 und 20 durchgeführt werden.

Alle Ein- und Ausgänge der Baugruppe 14 sind kurzschlußfest gegenüber Fahrzeugmasse und der 12 V Fahrzeug-Spannung und lassen sich bei Kurzschlüssen als Fehler detektieren, die gemeldet werden bzw. zusätzlich zur Meldung bei solchen Kurzschlüssen, durch die die Sicherheit des Betriebs und des Fahrzeugs in unzulässiger Weise beeinträchtigt wird, zu Öffnung der Schalt- bzw. Arbeitskontakte 4, 5 und 20 führen.

Die Brennstoffzellenspannung wird durch Festlegen von Unter- und Obergrenzen auf Fehler hin überwacht. Ebenso werden bei der Isolationswiderstandsüberwachung Schwellen für einen zu kleinen Isolationswiderstand festgelegt mit entsprechender Alarmbehandlung und einer Schwelle für einen zu großen Isolationswiderstand, ab der auf Unterbrechung erkannt wird. Da die Meßzeit für die Isolationsmessung relativ lang ist, wird für jeden neuen Startvorgang (Einschalten der Versorgungsspannung) eine Schnellmessung vorgesehen, jedoch mit etwas verminderter Genauigkeit. Bei der Überwachung des Brennstoffzellenstromes werden die höchsten Sicherheitsvorkehrungen getroffen. Die Unter- und Obergrenzen des Stromes werden zunächst mittels Software überwacht. Beim Überschreiten der Obergrenze (Kurzschluß) wird redundant eine schnelle Hardwareabschaltung der beiden Schaltkontakte 4, 5 und des Kontakts 20 vorgenommen. Damit auch ein Schaltungsdefekt der Strommessung erkannt werden kann, wird über eine zusätzliche Prüfwicklung des Stromsensors ein Prüfstrom eingespeist und kontinuierlich überwacht.

Auch für die Überwachung der Wasserstoffkonzentration wird eine redundante Hardwareschaltung zur Softwareüberwachung verwendet.

Mit der erfindungsgemäßen Steuer- und Auswerteinheit auf der kompakten Baugruppe 14 läßt sich auf wirtschaftliche und sichere Weise eine Überwachung der Brennstoffzelle, des Brennstoffzellennetzes und des Isolationswiderstands dieses Netzes erreichen. Im Falle einer Gefährdung wird die Verbindung zwischen Brennstoffzelle und Netz geöffnet. Die Baugruppe 14 kann vor Einbau in ein Fahrzeug geprüft werden, so daß eine zeitaufwendige Prüfung nach dem Einbau entfallen kann.

## Patentansprüche

1. Verfahren zum Steuern und zur Einstellung des Schaltzustands einer Schaltverbindung zwischen den elektrischen Ausgängen (2, 3) bzw. Polen einer Brennstoffzelle (1) und einem isolierten elektrischen Netz (6, 7) an das von der Brennstoffzelle (1) mit Energie versorgte Verbraucher (8) angeschlossen sind, wobei ein weiteres Netz (21) vorgesehen ist, das eine geringere Spannung als das an die Brennstoffzelle anschließbare Netz sowie eine Speicherbatterie aufweist,
**dadurch gekennzeichnet,**
**daß** von Sensoren Vorrichtungszustände gemeldet werden, bei denen die Versorgung des elektrisch isolierten Netzes (6, 7) mit Energie aus Sicherheitsgründen ausgeschlossen oder ausgesetzt werden muß, daß mit einer aus dem weiteren Netz (21) mit Energie versorgten Steuer- und Auswerteinheit die Sensoren überwacht werden, daß die Schaltverbindung an jedem Ausgang bzw. Pol (2, 3) der Brennstoffzelle (1) zum Freischalten des elektrisch isolierten Netzes (21) von den gegen die leitenden Teile der Vorrichtung elektrisch isolierten Ausgängen bzw. Polen (2, 3) der Brennstoffzelle (1) wenigstens einen an den Ausgang bzw. Pol (2, 3) angeschlossenen Schalt- bzw. Arbeitskontakt (4, 5) eines Schaltorgans aufweist, dass die an die Pole bzw. Ausgänge angeschlossenen Schalt- bzw. Arbeitskontakte (4, 5) zu einem oder zu getrennten Schaltorganen gehören, der bzw. die mit der Schalt- und Steuereinheit verbunden sind, daß dem oder den Schaltorganen die Energie zum Schließen der Schalt- bzw. Arbeitskontakte (4, 5) beim Starten der Brennstoffzelle (1) nach dem Erreichen der Betriebsbereitschaft der Brennstoffzelle (1) durch die Schalt- und Steuereinheit freigegeben wird, wenn von der Schalt- und Steuereinheit keine Meldung aus wenigstens einem Sensor, die sich auf eine aus Sicherheitsgründen unzulässige Schließung der Schalt- bzw. Arbeitskontakte (4, 5) der Schaltorgane bezieht, erfasst ist, und dass bei Erfassung wenigstens einer Meldung aus wenigstens einem Sensor, die sich auf eine aus Sicherheitsgründen unzulässige Schließstellung des Schalt- bzw. Arbeitskontakts (4, 5) bezieht, von der Steuer- und Auswerteinheit die Energiezufuhr zu dem bzw. den Schaltorganen blockiert bzw. unterbrochen wird.

2. Verfahren nach Anspruch 1,
**dadurch gekennzeichnet,**
**daß** einem der an die Ausgänge bzw. Pole (2, 3) der Brennstoffzelle (1) angeschlossenen Schalt- bzw. Arbeitskontakte (4, 5) die Reihenschaltung eines Widerstands (52) und eines Schalt- bzw. Arbeitskontakts (20) eines mit der Schalt- bzw. Steuereinheit verbundenen, getrennt von den anderen Schaltorganen betätigbaren weiteren Schaltorgans parallel geschaltet ist, dem die Energie zum Schließen des Schalt- bzw. Arbeitskontakts (20) nach dem Starten der Brennstoffzelle (1) und dem Erreichen von deren Betriebsbereitschaft zugleich mit der Energie zum Schließen des Schalt- bzw. Arbeitskontakts des Schaltorgans zugeführt wird, dessen Schalt- bzw. Arbeitskontakt (4) an den anderen Ausgang bzw. Pol (2) angeschlossen ist, und dass bei der Erfassung einer Meldung durch die Schalt- und Steuereinheit, die sich auf eine unzulässige Schließstellung der Schalt- bzw. Arbeitskontakte der Schaltorgane bezieht, die Energie zum Betätigen des weiteren Schaltorgans und der anderen Schaltorgane blockiert bzw. unterbrochen wird.

3. Verfahren nach Anspruch 1 oder 2,
**dadurch gekennzeichnet,**
**daß** das Austreten von Wasserstoff aus den wasserstofferzeugenden bzw. wasserstoffspeichernden Einheiten durch Gassensoren, der Laststrom der Brennstoffzelle (1) auf Über- oder Unterschreiten von Grenzwerten durch einen der Brennstoffzelle nachgeschalteten Sensor, der Aufprall der mobilen Vorrichtung auf ein Hindernis durch wenigstens einen Crash-Sensor, der Isolationswiderstand des elektrisch isolierten Netzes gegen die Masse der Vorrichtung, die Ausgangsspannung der Brennstoffzelle (1) auf Über- oder Unterschreiten von Grenzwerten, der Schließzustand von Türen und Deckeln durch Schalter und die Versorgungsspannung des weiteren Netzes auf Über- und Unterschreiten von Grenzwerten überwacht und auf Vorliegen von Bedingungen für das Öffnen der Arbeitskontaktehde (4, 5, 20) Schaltorgane geprüft werden.

4. Verfahren nach zumindest einem der vorhergehenden Ansprüche,
**dadurch gekennzeichnet,**
**daß** der Isolationswiderstand zwischen dem elektrisch isolierten Netz und der Masse der Vorrichtung durch ein Impulsmeßverfahren bestimmt wird, mit dem positive und negative Impulse abwechselnd über einen Meßwiderstand (44) vorgegebener Größe auf die Masse gegeben werden, und daß die Impulse einen über die Isolationswiderstände zu einem Bezugspunkt im Netz fließenden Strom hervorrufen, der durch einen Spannungsabfall am Meßwiderstand (44) gemessen wird.

5. Verfahren nach zumindest einem der vorhergehenden Ansprüche,
**dadurch gekennzeichnet,**
**daß** ein Stromsensor (39) durch Einspeisung eines Prüfstroms in eine zusätzliche Wicklung eines Stromwandlers auf einwandfreie Funktion überwacht wird.

6. Verfahren nach zumindest einem der vorhergehenden Ansprüche,
**dadurch gekennzeichnet,**
**daß** beim Ansprechen eines oder mehrerer Gassensoren die Schalt- bzw. Arbeitskontakte (4, 5) der Schaltverbindung zwischen den Ausgängen bzw. Polen (2, 3) der Brennstoffzelle (1) und dem elektrisch isolierten Netz (6, 7) sowie wenigstens ein Schalt- bzw. Arbeitskontakt eines zusätzlichen Schaltorgans im weiteren Netz zur Unterbrechung der Energieversorgung wenigstens der Schalt- und Steuereinheit geöffnet werden.

7. Verfahren nach zumindest einem der vorhergehenden Ansprüche,
**dadurch gekennzeichnet,**
**daß** das getrennt betätigbare Schaltorgan (19) ein Relais und die anderen Schaltorgane (9, 10) Leistungs- oder Lasttrennschalter sind.

8. Anordnung zum Steuern und zur Einstellung der Schaltzustände einer Schaltverbindung zwischen den elektrischen Ausgängen einer Brennstoffzelle (1) und einem isolierten elektrischen Netz, an das von der Brennstoffzelle (1) mit Energie versorgte Verbraucher angeschlossen sind, wobei ein weiteres Netz vorgesehen ist, das eine geringere Spannung als das an die Brennstoffzelle anschließbare Netz und eine Speicherbatterie aufweist,
**dadurch gekennzeichnet,**
**daß** die Pole bzw. Ausgänge (2, 3) der Brennstoffzelle (1) je über wenigstens einen Schalt- bzw. Arbeitskontakt (4, 5) mit dem elektrisch isolierten Netz verbunden sind, daß eine Steuer- und Auswerteinheit einer Baugruppe (14) einen an einen internen Bus angeschlossenen Prozessor (30), eine Logikschaltung (26) mit hardwaremäßig ausgebildeten logischen Funktionen, einen mit dem Prozessor (30) galvanisch getrennt verbundenen A/D-Umsetzer (40) zur Umsetzung des analog gemessenen Brennstoffzellenstroms, der analog gemessenen Brennstoffzellenspannung und der analogen Spannung eines Meßwiderstands für die Isolationsüberprüfung, ein vom weiteren Netz gespeistes Netzteil (23) mit galvanischer Trennung für die Versorgung des A/D-Umsetzers (40) mit Betriebsspannung, an den Ausgang der Logikschaltung (26) angeschlossene Steuerbausteine (11, 12) und an den Prozessor (30) und die Logikschaltung angeschlossene Umsetzer (27, 28) für die Spannungsversorgung von Gassensoren und die Anpassung der von den Gassensoren ausgegebenen Signale an die Pegel der Logikschaltung (26) und des Prozessors (30) aufweist, daß der Logikbaustein (26) und der Prozessor (30), die Umsetzer (27, 28) und die Steuerbausteine (11, 12) mit Be-triebsspannung vom weiteren Netz versorgt werden, daß wenigstens ein Ausgang des Prozessors (30) mit einem entsprechenden Eingang der Logikschaltung verbunden ist, die mit Sensoren für die Erzeugung von Meldesignalen von Zuständen der Vorrichtung oder deren Teile verbunden ist, daß durch die oder über die von einem übergeordneten Gerät gesteuerte Logikschaltung (26) die Freigabe von Ausgangssignalen der Steuerbausteine (11, 12) steuerbar ist, an die jeweils eine Spule eines einen der beiden Schalt- bzw. Arbeitskontakte aufweisenden ersten Schaltorgans und eines den anderen Schalt- bzw. Arbeitskontakt aufweisenden, zweiten Schaltorgans angeschlossen ist und daß bei vom Prozessor (30) erfaßten Strom-, Span-nungs- und/oder Isolationswiderstandsmeßwerten und bei von der Logikschaltung (26) erfaßten Sensormeßwerten, bei denen die Versorgung des elektrisch isolierten Netzes aus Sicherheitsgründen ausgeschlossen oder ausgesetzt werden muß, die Ausgabe von Ausgangssignalen der Steuerbausteine an die Spulen blockiert oder unterbrochen wird.

9. Anordnung nach Anspruch 8,
**dadurch gekennzeichnet,**
**daß** ein weiterer Schalt- bzw. Arbeitskontakt (20) eines dritten Schaltorgans in Reihe mit einem Widerstand (52) parallel zum Schalt- bzw. Arbeitskontakt (5) des zweiten oder ersten Schaltorgans angeordnet ist, und daß das dritte Schaltorgan mit einem vom weiteren Netz mit Betriebsspannung versorgten Treiberbaustein (18) auf der Baugruppe (14) verbunden ist, der an die Logikschaltung (26) angeschlossen ist, die den Treiberbaustein (15) in der Startphase nach dem Erreichen der Betriebsbereitschaft der Brennstoffzelle (1) zeitlich vor der Abgabe eines Steuersignals an den einen Steuerbaustein (11), der das zweite oder erste Schaltorgan (12)betätigt, mit einem Steuersignal zur Ausgabe eines Betätigungssignals an das dritte Schaltorgan zugleich mit der Ausgabe eines Steuersignals zur Betätigung des ersten oder zweiten Schaltorgans veranlaßt und zur Abschaltung der Pole bzw. Ausgänge der Brennstoffzelle (1) vom elektrisch isolierten Netz die Ausgabe von Steuersignalen zur Betätigung der drei Schaltorgane blockiert.

10. Anordnung nach Anspruch 8 oder 9,
**dadurch gekennzeichnet,**
**daß** mit dem Ausgang der Logikschaltung (26) ein weiterer Treiberbaustein (15) auf der Baugruppe (14) verbunden ist, von dem ein Systemrelais (16) steuerbar ist, das zur Unterbrechung der Stromversorgung aus dem weiteren Netz wenigstens für die Baugruppe (14) beim Ansprechen wenigstens eines Gassensors zugleich mit den Schaltorganen abschaltbar ist.

11. Anordnung nach zumindest einem der Ansprüche 8 bis 10,
**dadurch gekennzeichnet,**
**daß** die Baugruppe (14) eine Leiterplatte (13) mit einem ersten Abschnitt (24) aufweist, der die von dem weiteren Netz (21) mit Betriebsspannung direkt versorgten Bauelemente wie Logikschaltung (26), Prozessor (30), Umsetzer (27, 28) und Steuer- und Treiberbausteine mit zugehörigen Leiterbahnen und die Anschlüsse zu den Spulen der Schaltorgane sowie Anschlüsse von mit dem weiteren Netz (21) verbundener Sensoren, von Busleitern und von einer Masseverbindung trägt und der von einem zweiten Abschnitt (25) der Leiterplatte (13) getrennt ist, der von der Spannung der Brennstoffzelle des Netzes der Brennstoffzelle (1) beaufschlagte Bauelemente wie einem Stromsensor (39), einen Spannungsteiler für die Spannungsmessung an der Ausgängen (2, 3) der Brennstoffzelle, einen A/D-Umsetzer (40) für die Umwandlung von analogen Strom- und Spannungsmeßwerten sowie eine Einrichtung (42) für die Isolationsmessung trägt.

12. Anordnung nach zumindest einem der Ansprüche 8 bis 11,
**dadurch gekennzeichnet,**
**daß** die Minusseite der Brennstoffzellenspannung Bezugspotential für von der Spannung der Brennstoffzelle beaufschlagte Bauteile auf der Baugruppe (14) ist und an einen Anschluß des zweiten Abschnitts(25) der Leiterplatte (14) gelegt ist.

13. Anordnung nach zumindest einer der Ansprüche 8 bis 12,
**dadurch gekennzeichnet,**
**daß** der Stromsensor (39) einen Stromwandler (38) mit einem berührungslos durch die Leiterplatte (13) und einen auf dieser angeordneten Stromwandlerkern hindurchführten Leiter aufweist.

14. Anordnung nach zumindest einem der Ansprüche 8 bis 13,
**dadurch gekennzeichnet,**
**daß** für die Messung des Isolationswiderstands des isolierten elektrischen Netzes gegenüber der Masse der mobilen Einrichtung ein auf der Leiteplatte (13) im zweiten Abschnitt (25) angeordneter Meßwiderstand (44) vorgesehen ist, der von positiven und negativen Spannungsimpulsen beaufschlagbar ist, und daß der Meßwiderstand über ein Hochpaß und einen Tiefpaß mit dem A/D-Umsetzer (40) verbunden ist.

15. Anordnung nach zumindest einem der Ansprüche 8 bis 14,
**dadurch gekennzeichnet,**
**daß** der Prozessor (30) und die Software im Prozessor (30) mit einem Watchdog-Baustein überwacht wird, der bei Feststellung eines Fehlers eine Meldung erzeugt und/oder die Abschaltung der Schalt bzw. Arbeitskontakte über die Logikschaltung (26) steuert.

16. Anordnung nach zumindest einem der Ansprüche 8 bis 15,
**dadurch gekennzeichnet,**
**daß** die Versorgungsspannung des weiteren Netzes (21) durch eine entsprechende Eingabe im Prozessor (30) auf vorgegebene Grenzwerte hin überwacht wird, bei deren Über- oder Unterschreitung eine Meldung und/oder Öffnung der Schalt- bzw. Arbeitskontakte (4, 5, 20) erfolgt.

17. Anordnung nach zumindest einem der Ansprüche 8 bis 16,
**dadurch gekennzeichnet,**
**daß** die Ein- und Ausgänge der auf der Leiterplatte (13) angeordneten Bauteile wie Logikschaltung (26), Prozessor, Treiberstufen (15, 18), Steuerschaltungen (11, 12) und Umsetzer (27, 28) kurzschlußfest ausgebildet sind.

18. Anordnung nach zumindest einem der Ansprüche 8 bis 17,
**dadurch gekennzeichnet,**
**daß** die Funktionsweise des Busses vom Prozessor periodisch überprüft wird.

19. Anordnung nach zumindest einem der Ansprüche 8 bis 18,
**dadurch gekennzeichnet,**
**daß** der Brennstoffzellenstrom auf Über- und Unterschreiten vorgegebener Grenzwerte mit dem Prozessor (30) überwacht wird, bei deren Über- und Unterschreitung eine Meldung und/oder eine Öffnung der Schalt- bzw. Arbeitskontakte (4, 5, 20) erfolgt.

20. Anordnung nach zumindest einem der Ansprüche 8 bis 19,+
**dadurch gekennzeichnet,**
**daß** die Brennstoffzellenspannung auf Über- und Unterschreitung von vorgegebenen Grenzwerten mit dem Prozessor (30) überwacht wird, bei deren Über- oder Unterschreitung eine Meldung und/oder eine Öffnung der Schalt- bzw. Arbeitskontakte (4, 5, 20) erfolgt.

21. Vorrichtung nach zumindest einem der Ansprüche 8 bis 20,
**dadurch gekennzeichnet,**
**daß** der Isolationswiderstand auf Unterschreitung einer Grenze mittels des Prozessors (30) überwacht wird, bei deren Unterschreitung eine Öffnung der Schalt- bzw. Arbeitskontakte (4, 5, 20) erfolgt.

22. Anordnung nach zumindest einem der Ansprüche 8 bis 21,
**dadurch gekennzeichnet,**
**daß** mit Software im Prozessor (30) ein Nullpunkts- und Verstärkungsabgleich für die Meßwerte von Strom, Spannung und Isolationswiderstand erfolgt.

23. Anordnung nach zumindest einem der Ansprüche 8 bis 22,
**dadurch gekennzeichnet,**
**daß** die Schaltzustände der Schaltorgane durch Hilfskontakte, die an den Prozessor (30) angeschlossen sind, überwachbar sind.

24. Anordnung nach zumindest einem der Ansprüche 8 bis 23,
**dadurch gekennzeichnet,**
**daß** das erste und zweite Schaltorgan (9, 10) je ein Lasttrennschalter oder Leistungsschalter und das weitere Schaltorgan (19) ein Relais ist.

25. Anordnung nach Anspruch 24,
**dadurch gekennzeichnet,**
**dass** das erste und zweite Schaltorgan ein Schütz (9,10) ist.

## Claims

1. Method for controlling and for setting the switching state of a switching connection between the electrical outputs (2, 3) or poles of a fuel cell (1) and an isolated electrical network (6, 7), to which loads (8), which are supplied with power from the fuel cell (1), are connected, with a further network (21) being provided whose voltage is lower than that of the network which can be connected to the fuel cell and of a storage battery, **characterized**
**in that** sensors signal apparatus states for which the supply of power to the electrically isolated network (6, 7) must be precluded or stopped for safety reasons,
**in that** the sensors are monitored by a control and evaluation unit which is supplied with power from the further network (21), in that the switching connection has at least one switching or make contact (4, 5) of a switching member which is connected to each output or pole (2, 3) of the fuel cell (1) in order to disconnect the electrically isolated network (21) from those outputs or poles (2, 3) of the fuel cell (1) which are electrically isolated from the conductive parts of the apparatus, in that the switching or make contacts (4, 5) which are connected to the poles or outputs are part of one switching member or of separate switching members which is or are connected to the switching and control unit, in that the energy for closing the switching or make contacts (4, 5) during starting of the fuel cell (1) is released to the switching member or members by the switching and control unit once the fuel cell (1) has reached operational readiness, provided the switching and control unit does not detect any signal from at least one sensor relating to the closure of the switching or make contacts (4, 5) of the switching members not being permissible for safety reasons, and in that, on detection of at least one signal from at least one sensor which relates to the closure of the switching or make contact (4, 5) not being permissible for safety reasons, the control and evaluation unit blocks or interrupts the power supply to the switching member or members.

2. Method according to Claim 1,
**characterized**
**in that** the series circuit formed by a resistor (52) and a switching or make contact (20) of a further switching member, which is connected to the switching and control unit and can be operated separately from the other switching members, is connected in parallel with one of the switching or make contacts (4, 5) which are connected to the outputs or poles (2, 3) of the fuel cell (1), to which further switching member the energy for closing the switching or make contact (20) is supplied at the same time as the energy for closing the switching or make contact of the switching member after the starting of the fuel cell (1) and after it has reached operational readiness, the switching or make contact (4) of which switching member is connected to the other output or pole (2), and in that, if the switching and control unit detects a signal which relates to the closure of the switching or make contacts of the switching members not being permissible, the power for operating the further switching member and the other switching members is blocked or interrupted.

3. The method according to Claim 1 or 2,
**characterized**
**in that** the emergence of hydrogen from the hydrogen-producing or hydrogen-storing units is monitored by means of gas sensors, a sensor which is connected downstream of the fuel cell monitors whether the load current from the fuel cell (1) has overshot or undershot limit values, at least one crash sensor monitors whether the mobile apparatus has impacted with an obstruction, the isolation resistance of the electrically isolated network from the apparatus earth is monitored, the output voltage of the fuel cell (1) is monitored to determine whether limit values are overshot or undershot, the closure state of doors and covers is monitored by switches, and the supply voltage of the further network is monitored for limit values being overshot and undershot, and the presence of conditions for the opening of the make contacts (4, 5, 20) of the switching members is checked.

4. Method according to at least one of the preceding claims,
**characterized**
**in that** the isolation resistance between the electrically isolated network and the apparatus earth is determined by means of a pulse measurement method, with the positive and negative pulses being passed to earth alternatively via a measurement resistor (44) of predetermined magnitude, and in that the pulses cause a current to flow via the isolation resistances to a reference point in the network, and this current is measured by means of a voltage drop across the measurement resistor (44).

5. Method according to at least one of the preceding claims,
**characterized**
**in that** a current sensor (39) is monitored for correct operation by feeding a test current into an additional winding of a current transformer.

6. Method according to at least one of the preceding claims,
**characterized**
**in that**, when one or more of the gas sensors responds, the switching or make contacts (4, 5) of the switching connection between the outputs or poles (2, 3) of the fuel cell (1) and the electrically isolated network (6, 7), as well as at least one switching or make contact of an additional switching member in the further network, are opened in order to interrupt the power supply at least to the switching and control unit.

7. Method according to at least one of the preceding claims,
**characterized**
**in that** the separately operable switching member (19) is a relay, and the other switching members (9, 10) are circuit breakers or switch disconnectors.

8. Arrangement for controlling and for setting the switching states of a switching connection between the electrical outputs of a fuel cell (1) and an isolated electrical network, to which loads, which are supplied with power from the fuel cell (1), are connected, with a further network being provided whose voltage is lower than that of the network which can be connected to the fuel cell and of a storage battery, **characterized**
**in that** the poles or outputs (2, 3) of the fuel cell (1) are each connected via at least one switching or make contact (4, 5) to the electrically isolated network, in that a control and evaluation unit of an assembly (14) has a processor (30) which is connected to an internal bus, a logic circuit (26) with logic functions in the form of hardware, an A/D converter (40) (which is connected to the processor (30) in a DC-isolating manner) for converting the analogue measured fuel cell current, the analogue measured fuel cell voltage and the analogue voltage of a measurement resistor for the isolation checking, a power supply unit (23), which is fed from the further network, with DC isolation for supplying an operating voltage to the A/D convertor (40), control modules (11, 12) which are connected to the output of the logic circuit (26) and converters (27, 28), which are connected to the processor (30) and to the logic circuit, for supplying voltage to the gas sensors, and for matching signals which are emitted from the gas sensors to the levels of the logic circuit (26) and of the processor (30), in that the logic module (26) and the processor (30), the converters (27, 28) and the control modules (11, 12) are supplied with an operating voltage from the further network, in that at least one output of the processor (30) is connected to a corresponding input of the logic circuit, which logic circuit is connected to sensors for producing signals relating to the states of the apparatus or its parts, in that the enabling of output signals from the control modules (11, 12) can be controlled by means of or via the logic circuit (26), which is controlled by a higher-level appliance, is connected to the respective one coil of a first switching member which has one of the two switching or make contacts and of a second switching member which has the other switching or make contact, and in that, for current, voltage and/or isolation resistance measured values which are detected by the processor (30), and for sensor measured values which are detected by the logic circuit (26) for which the supply to the electrically isolated network must be precluded or stopped for safety reasons, the output of output signals from the control modules to the coils is blocked or interrupted.

9. Arrangement according to Claim 8,
**characterized**
**in that** a further switching or make contact (20) of a third switching member in series with a resistor (52) is arranged in parallel with the switching or make contact (5) of the second or first switching member, and in that the third switching member is connected to a driver module (18), which is supplied with an operating voltage from the further network on the assembly (14), which driver module (18) is connected to the logic circuit (26) such that, in the start phase after the fuel cell (1) has reached operational readiness but at a time before the emission of a control signal to the one control module (11), which operates the second or first switching member (12), the logic circuit (26) causes a control signal to be applied to the driver module (15) in order to emit an operating signal to the third switching member at the same time as the emission of a control signal for operating the first or second switching member, and blocks the emission of control signals in order to operate the three switching members, in order to disconnect the poles or outputs of the fuel cell (1) from the electrically isolated network.

10. Arrangement according to Claim 8 or 9,
**characterized**
**in that** a further driver module (15) on the assembly (14) is connected to the output of the logic circuit (26) and can control a system relay (16), which can be disconnected at the same time as the switching members in order to interrupt the current supply from the further network, at least for the assembly (14), when at least one gas sensor responds.

11. Arrangement according to at least one of Claims 8 to 10,
**characterized**
**in that** the assembly (14) has a printed circuit board (13) with a first section (24), which is fitted with those components which are supplied with an operating voltage directly from the further network (21), such as the logic circuit (26), the processor (30), the converters (27, 28) and control and driver modules with associated conductor tracks and the connections for the coils of the switching members as well as the connections of sensors that are connected to the further network (21), of bus conductors and of an earth connection, and which is separated from a further section (25) of the printed circuit board (13), which is fitted with those components to which the voltage of the fuel cell of the network of the fuel cell (1) is applied, such as a current sensor (39), a voltage divider for measuring the voltage of the outputs (2, 3) of the fuel cell, an A/D converter (40) for conversion of analogue current and voltage measured values, and a device (42) for isolation measurement.

12. Arrangement according to at least one of Claims 8 to 11,
**characterized**
**in that** the negative side of the fuel cell voltage is the reference potential for those components on the assembly (14) to which the voltage of the fuel cell is applied, and is connected to one connection of the second section (25) of the printed circuit board (14).

13. Arrangement according to at least one of Claims 8 to 12,
**characterized**
**in that** the current sensor (39) has a current transformer (38) with a conductor which passes through the printed circuit board (13) and through a current transformer core, which is arranged on this printed circuit board (13), without touching them.

14. Arrangement according to at least one of Claims 8 to 13,
**characterized**
**in that** a measurement resistor (44) which is arranged in the second section (25) on the printed circuit board (13) is provided for measuring the isolation resistance of the isolated electrical network from the earth of the mobile device, and may have a positive and negative voltage pulses applied to it, and in that the measurement resistor is connected to the A/D converter (40) via a high-pass filter and a low-pass filter.

15. Arrangement according to at least one of Claims 8 to 14,
**characterized**
**in that** the processor (30) and the software in the processor (30) are monitored by means of a watchdog module, which produces a signal if a fault is found, and/or controls the disconnection of the switching or make contacts via the logic circuit (26).

16. Arrangement according to at least one of Claims 8 to 15,
**characterized**
**in that** the supply voltage of the further network (21) is monitored against predetermined limit values by means of an appropriate input in the processor (30) such that, if these limit values are overshot or undershot, this results in a signal and/or opening of the switching or make contacts (4, 5, 20).

17. Arrangement according to at least one of Claims 8 to 16,
**characterized**
**in that** the inputs and outputs of those components which are arranged on the printed circuit board (13), such as the logic circuit (26), the processor, the driver stages (15, 18), the control circuits (11, 12) and the converters (27, 28) are designed to be resistant to short circuits.

18. Arrangement according to at least one of Claims 8 to 17,
**characterized**
**in that** the operation of the bus is checked periodically by the processor.

19. Arrangement according to at least one of Claims 8 to 18,
**characterized**
**in that** the fuel cell current is monitored by the processor (30) for overshooting and undershooting of predetermined limit values such that, if these limit values are overshot or undershot, this results in a signal and/or opening of the switching or make contacts (4, 5, 20).

20. Arrangement according to at least one of Claims 8 to 19,
**characterized**
**in that** the fuel cell voltage is monitored by the processor (30) for overshooting and undershooting of predetermined limit values such that, if these limit values are overshot or undershot, this results in a signal and/or opening of the switching or make contacts (4, 5, 20).

21. Apparatus according to at least one of Claims 8 to 20,
**characterized**
**in that** the isolation resistance is monitored by means of the processor (30) for undershooting of a limit which, if undershot, results in the switching or make contacts (4, 5, 20) being opened.

22. Arrangement according to at least one of Claims 8 to 21,
**characterized**
**in that** software in the processor (30) is used to trim the zero point and the amplification for the measured values of the current, voltage and isolation resistance.

23. Arrangement according to at least one of Claims 8 to 22,
**characterized**
**in that** the switching states of the switching members can be monitored by means of auxiliary contacts, which are connected to the processor (30).

24. Arrangement according to at least one of Claims 8 to 23,
**characterized**
**in that** the first and the second switching member (9, 10) is in each case a switch disconnector or circuit breaker, and the further switching member (19) is a relay.

25. Arrangement according to Claim 24,
**characterized**
**in that** the first and the second switching member is a contactor (9, 10).

## Revendications

1. Procédé pour commander et ajuster l'état de commutation d'une connexion de commutation entre les sorties électriques (2, 3) ou les pôles d'une pile à combustible (1) et un réseau électrique isolé (6, 7), auquel sont raccordés des consommateurs (8) alimentés en énergie provenant de la pile à combustible (1), un réseau supplémentaire (21) étant prévu, lequel présente une plus faible tension que le réseau pouvant être raccordé à la pile à combustible ainsi qu'une batterie d'accumulation,
**caractérisé en ce que**
des capteurs détectent des états du dispositif, dans lesquels l'alimentation en énergie du réseau isolé électriquement (6, 7) doit être exclue ou interrompue pour des raisons de sécurité, **en ce qu'**une unité de commande et d'analyse alimentée en énergie à partir du réseau supplémentaire (21) contrôle les capteurs, **en ce que** la connexion de commutation à chaque sortie ou à chaque pôle (2, 3) de la pile à combustible (1) présente au moins un contact de commutation ou de travail (4, 5) d'un organe de commutation, raccordé à la sortie ou au pôle (2, 3) pour la déconnexion du réseau isolé électriquement (21) des sorties ou des pôles (2, 3) électriquement isolés de la pile à combustible (1) par rapport aux parties conductrices du dispositif, **en ce que** les contacts de commutation ou de travail (4, 5) raccordés aux pôles ou aux sorties appartiennent à un organe de commutation ou à des organes de commutation séparés qui est ou sont connectés à l'unité de commutation et de commande, **en ce que** l'énergie pour la fermeture des contacts de commutation ou de travail (4, 5) est libérée par l'unité de commutation et de commande pour l'organe de commutation ou les organes de commutation lors du démarrage de la pile à combustible (1) une fois que la pile à combustible (1) a atteint un état prêt à fonctionner, lorsqu'aucune indication provenant d'au moins un capteur, se rapportant à une fermeture inacceptable pour des raisons de sécurité des contacts de commutation ou de travail (4, 5) des organes de commutation, n'est détectée par l'unité de commutation et de commande, et **en ce qu'**à la détection d'au moins une indication d'au moins un capteur se rapportant à la position de fermeture inacceptable pour des raisons de sécurité du contact de commutation ou de travail (4, 5), l'alimentation en énergie à l'organe de commutation ou aux organes de commutation est bloquée ou interrompue par l'unité de commande et d'analyse.

2. Procédé selon la revendication 1,
**caractérisé en ce que**
l'on monte en parallèle avec l'un des contacts de commutation ou de travail (4, 5) raccordés aux sorties ou aux pôles (2, 3) de la pile à combustible, le montage en série d'une résistance (52) et d'un contact de commutation ou de travail (20) d'un organe de commutation supplémentaire connecté à l'unité de commutation ou de travail, pouvant être actionné séparément des autres organes de commutation, auquel est acheminée l'énergie pour la fermeture du contact de commutation ou de travail (20) après le démarrage de la pile à combustible (1) et une fois que son état prêt à fonctionner est atteint, conjointement avec l'énergie pour la fermeture du contact de commutation ou de travail de l'organe de commutation, dont le contact de commutation ou de travail (4) est raccordé à l'autre sortie ou pôle (2), et **en ce qu'**à la détection d'une indication par l'unité de commutation et de commande qui se rapporte à une position de fermeture inacceptable des contacts de commutation ou de travail des organes de commutation, l'énergie pour l'actionnement de l'organe de commutation supplémentaire et des autres organes de commutation est bloquée ou interrompue.

3. Procédé selon la revendication 1 ou 2,
**caractérisé en ce que**
la sortie d'hydrogène hors des unités de production ou de stockage d'hydrogène est contrôlée par des capteurs de gaz, le courant de charge de la pile à combustible (1) est contrôlé en termes de dépassement vers le haut et vers le bas de valeurs limites, par un capteur monté en aval de la pile à combustible, l'incidence du dispositif mobile contre un obstacle est contrôlée par au moins un capteur de collision, la résistance d'isolation du réseau isolé électriquement par rapport à la masse du dispositif, la tension de sortie de la pile à combustible (1) en termes de dépassement par le haut et par le bas de valeurs limites, l'état de fermeture des portes et des couvercles par des commutateurs et la tension d'alimentation du réseau supplémentaire en termes de dépassement par le haut et par le bas de valeurs limites sont contrôlés et vérifiés en ce qui concerne la présence de conditions pour l'ouverture des contacts de travail (4, 5, 20) des organes de commutation.

4. Procédé selon au moins l'une quelconque des revendications précédentes,
**caractérisé en ce que**
la résistance d'isolation entre le réseau isolé électriquement et la masse du dispositif est déterminée par un procédé de mesure d'impulsions avec lequel des impulsions positives et négatives sont fournies à la masse en alternance par le biais d'une résistance de mesure (44) de grandeur prédéfinie, et **en ce que** les impulsions provoquent un courant s'écoulant dans le réseau par le biais des résistances d'isolation jusqu'à un point de référence qui est mesuré par une chute de tension au niveau de la résistance de mesure (44).

5. Procédé selon au moins l'une quelconque des revendications précédentes,
**caractérisé en ce qu'**
un capteur de courant (39) est contrôlé par l'injection d'un courant de vérification dans un enroulement supplémentaire d'un convertisseur de courant pour vérifier son parfait fonctionnement.

6. Procédé selon au moins l'une quelconque des revendications précédentes,
**caractérisé en ce que**
lors de la réaction d'un ou de plusieurs capteurs de gaz, les contacts de commutation ou de travail (4, 5) de la connexion de commutation entre les sortie ou les pôles (2, 3) de la pile à combustible (1) et le réseau isolé électriquement (6, 7) ainsi qu'au moins un contact de commutation ou de travail d'un organe de commutation supplémentaire dans le réseau supplémentaire sont ouverts pour interrompre l'alimentation en énergie d'au moins l'unité de commutation et de commande.

7. Procédé selon au moins l'une quelconque des revendications précédentes,
**caractérisé en ce que**
l'organe de commutation (19) actionnable séparément est un relais et les autres organes d'actionnement (9, 10) sont des commutateurs de puissance ou des sectionneurs à coupure en charge.

8. Agencement de commande et d'ajustement des états de commutation d'une connexion de commutation entre les sorties électriques d'une pile à combustible (1) et un réseau isolé électriquement, auquel sont raccordés des consommateurs alimentés en énergie depuis la pile à combustible (1), dans lequel un réseau supplémentaire est prévu, lequel présente une tension inférieure à celle du réseau pouvant être raccordé à la pile à combustible et une batterie d'accumulation,
**caractérisé en ce que**
les pôles ou les sorties (2, 3) de la pile à combustible (1) sont chacun connectés par le biais d'au moins un contact de commutation ou de travail (4, 5) au réseau isolé électriquement, **en ce qu'**une unité de commande et d'analyse d'un groupe modulaire (14) présente un processeur (30) raccordé à un bus interne, un circuit logique (26) avec des fonctions logiques réalisées par une structure matérielle, un convertisseur A/N (40) connecté au processeur par séparation galvanique pour la conversion du courant de la pile à combustible mesuré sous forme analogique, de la tension de la pile à combustible mesurée sous forme analogique, et de la tension analogique d'une résistance de mesure pour la vérification de l'isolation, une section de réseau (23) alimentée par le réseau supplémentaire avec une séparation galvanique pour l'alimentation du convertisseur A/N (40) en tension d'alimentation, des modules de commande (11, 12) raccordés à la sortie du circuit logique (26) et des convertisseurs (27, 28) raccordés au processeur (30) et au circuit logique pour l'alimentation en tension de capteurs de gaz, et l'adaptation des signaux fournis par les capteurs de gaz au niveau du circuit logique (26) et du processeur (30), **en ce que** le module logique (26) et le processeur (30), les convertisseurs (27, 28) et les modules de commande (11, 12) sont alimentés en tension d'alimentation du réseau supplémentaire, **en ce qu'**au moins une sortie du processeur (30) est connectée à l'entrée correspondante du circuit logique, qui est connecté à des capteurs pour la production de signaux d'information relatifs aux états du dispositif ou de ses pièces, **en ce que** par le biais du circuit logique (25) commandé par un appareil d'ordre supérieur, on peut commander l'émission de signaux de sortie des modules de commande (11, 12) auxquels est raccordée à chaque fois une bobine d'un premier organe de commutation présentant les deux contacts de commutation ou de travail et d'un deuxième organe de commutation présentant l'autre contact de commutation ou de travail, et **en ce que** dans le cas de valeurs de mesure de courant, de tension et/ou de résistance d'isolation détectées par le processeur (30) et dans le cas de valeurs de mesure de capteurs détectées par le circuit logique (26), pour lesquelles l'alimentation du réseau isolé électriquement doit être exclue ou interrompue pour des raisons de sécurité, la diffusion de signaux de sortie des modules de commande aux bobines est bloquée ou interrompue.

9. Agencement selon la revendication 8,
**caractérisé en ce qu'**
un contact de commutation ou de travail supplémentaire (20) d'un troisième organe de commutation est monté en série avec une résistance (52) parallèlement au contact de commutation ou de travail (5) du deuxième ou du premier organe de commutation, et **en ce que** le troisième organe de commutation est connecté à un module d'attaque (18) sur le groupe modulaire (14) alimenté par le réseau supplémentaire en tension d'alimentation, lequel est raccordé au circuit logique (26) qui entraîne le module d'attaque (15) dans la phase de démarrage après l'obtention de l'état prêt au fonctionnement de la pile à combustible (1) avant l'émission d'un signal de commande au premier module de commande (11) qui actionne le deuxième ou le premier organe de commutation (12), avec un signal de commande pour l'émission d'un signal d'actionnement au troisième organe de commutation conjointement avec l'émission d'un signal de commande pour l'actionnement du premier ou du deuxième organe de commutation et, pour la déconnexion des pôles ou des sorties de la pile à combustible (1) du réseau isolé électriquement, bloque l'émission de signaux de commande pour l'actionnement des trois organes de commutation.

10. Agencement selon la revendication 8 ou 9,
**caractérisé en ce qu'**
un module d'attaque supplémentaire (15) sur le groupe modulaire (14) est connecté à la sortie du circuit logique (26), par lequel un relais de système (16) peut être commandé, lequel peut être déconnecté conjointement aux organes de commutation pour interrompre l'alimentation en courant à partir du réseau supplémentaire au moins pour le groupe modulaire (14) lors de la réponse d'au moins un capteur de gaz.

11. Agencement selon au moins l'une quelconque des revendications 8 à 10,
**caractérisé en ce que**
le groupe modulaire (14) présente une plaque à circuits (13) avec une première portion (24) qui porte les éléments constructifs directement alimentés par le réseau supplémentaire (21) en tension d'alimentation, tels que le circuit logique (26), le processeur (30), les convertisseurs (27, 28) et les modules de commande et d'attaque avec les pistes conductrices associées et les raccords aux bobines des organes de commutation ainsi que les raccords de capteurs connectés au réseau supplémentaire (21), de bus et d'une connexion à la masse et qui est séparée d'une deuxième section (25) de la plaque à circuits (13), qui porte des éléments constructifs sollicités par la tension de la pile à combustible du réseau de la pile à combustible (1), tels qu'un capteur de courant (39), un diviseur de tension pour la mesure de la tension au niveau des sorties (2, 3) de la pile à combustible, un convertisseur A/N (40) pour la conversion de valeurs de mesure de courant et de tension ainsi qu'un dispositif (42) pour la mesure de l'isolation.

12. Agencement selon au moins l'une quelconque des revendications 8 à 11,
**caractérisé en ce que**
le côté négatif de la tension de la pile à combustible est le potentiel de référence pour les composants sollicités par la tension de la pile à combustible sur le groupe modulaire (14) et est appliqué à un raccord de la deuxième section (25) de la plaque à circuits (13).

13. Agencement selon au moins l'une quelconque des revendications 8 à 12,
**caractérisé en ce que**
le capteur de courant (39) présente un convertisseur de courant (38) avec un conducteur guidé sans contact à travers la plaque à circuits (13) et à travers un noyau de convertisseur de courant disposé sur celle-ci.

14. Agencement selon au moins l'une quelconque des revendications 8 à 13,
**caractérisé en ce que**
pour la mesure de la résistance d'isolation du réseau électrique isolé par rapport à la masse du dispositif mobile, on prévoit une résistance de mesure (44) disposée dans la deuxième section (25), laquelle peut être sollicitée par des impulsions de tension positives et négatives, et **en ce que** la résistance de mesure est connectée au convertisseur A/N par un filtre passe-haut et un filtre passe-bas.

15. Agencement selon au moins l'une quelconque des revendications 8 à 14,
**caractérisé en ce que**
le processeur (30) et le logiciel dans le processeur (30) sont contrôlés par un module Watchdog, qui produit un message lors de la détection d'une panne et/ou qui commande la déconnexion des contacts de commutation ou de travail par le biais du circuit logique (26).

16. Agencement selon au moins l'une quelconque des revendications 8 à 15,
**caractérisé en ce que**
la tension d'alimentation du réseau supplémentaire (21) est contrôlée par une entrée correspondante dans le processeur (30) en termes de valeurs limites prédéfinies, qui, lorsqu'elles sont dépassées par le haut ou par le bas, entraînent une indication et/ou l'ouverture des contacts de commutation ou de travail (4, 5, 20).

17. Agencement selon au moins l'une quelconque des revendications 8 à 16,
**caractérisé en ce que**
les entrées et les sorties des composants disposés sur la plaquette à circuits (13), comme le circuit logique (26), le processeur, les étages d'attaque (15, 18), les circuits de commande (11, 12) et les convertisseurs (27, 28) sont réalisées de manière protégée contre les courts-circuits.

18. Agencement selon au moins l'une quelconque des revendications 8 à 17,
**caractérisé en ce que**
le mode de fonctionnement du bus est contrôlé périodiquement par le processeur.

19. Agencement selon au moins l'une quelconque des revendications 8 à 18,
**caractérisé en ce que**
le courant de la pile à combustible est contrôlé par le processeur (30) en termes de dépassement par le haut ou par le bas de valeurs limites prédéterminées, qui, lorsqu'elles sont dépassées par le haut ou par le bas, entraînent une indication et/ou une ouverture des contacts de commutation ou de travail (4, 5, 20).

20. Agencement selon au moins l'une quelconque des revendications 8 à 19,
**caractérisé en ce que**
la tension de la pile à combustible est contrôlée par le processeur (30) en termes de dépassement par le haut ou par le bas de valeurs limites prédéterminées, qui, lorsqu'elles sont dépassées par le haut ou par le bas, entraînent une indication et/ou une ouverture des contacts de commutation ou de travail (4, 5, 20).

21. Agencement selon au moins l'une quelconque des revendications 8 à 20,
**caractérisé en ce que**
la résistance d'isolation est contrôlée par le processeur (30) en termes de dépassement par le bas d'une limite, qui, lorsqu'elle est dépassée par le bas, provoque une ouverture des contacts de commutation ou de travail (4, 5, 20).

22. Agencement selon au moins l'une quelconque des revendications 8 à 21,
**caractérisé en ce que**
le logiciel du processeur (30) effectue une comparaison de point d'origine et d'amplification pour les valeurs de mesure du courant, de la tension et de la résistance d'isolation.

23. Agencement selon au moins l'une quelconque des revendications 8 à 22,
**caractérisé en ce que**
les états de commutation des organes de commutation peuvent être contrôlés par des contacts auxiliaires qui sont raccordés au processeur (30).

24. Agencement selon au moins l'une quelconque des revendications 8 à 23,
**caractérisé en ce que**
le premier et le deuxième organe de commutation (9, 10) sont respectivement un sectionneur à coupure en charge ou un sectionneur de puissance et l'organe de commutation supplémentaire (19) est un relais.

25. Agencement selon la revendication 24,
**caractérisé en ce que**
le premier et le deuxième organe de commutation sont un contacteur (9, 10).
